# EUROPEAN PATENT APPLICATION

(11) **EP 1 182 389 A1**
(43) Date of publication of application: **27.02.2002**
(21) Application number: 00117313.7
(22) Date of filing: 18.08.2000
(51) Int. Cl.: F16K 31/06, F16K 31/08

(54) **Solenoid valve control method and apparatus**

(71) Applicant: Ranco Incorporated of Delaware, Wilmington, Delaware 19801-1612 (US)
(72) Inventor: Bailey, Graham, 67366 Weingarten (DE); Ballocchi, Paolo, 23880 Casatenovo (IT); Cerizza, Giovanni, 26900 Lodi (IT); Heger, Helmut, 68789 St.Leon-Rot (DE); Hirsch, Mike, 68809 Neulussheim (DE); Rossi, Guglielmo, 76351 Linkenheim-Hoch (DE)
(74) Representative: HOFFMANN - EITLE

(57) **Abstract**

The present matter relates to tristable solenoid valve being operated with minimum energy in a stable manner. To achieve a transition between the different stop positions in the tristable solenoid valve a single coil of the valve is excited with short positive or negative pulses of appropriate pulse polarity and pulse energy under control of a control unit (50). An intermediate stop position (M) is obtained through supply of a short sequence of pulses which energy content is determined as a function of inertia and certain resonance characteristics of the solenoid valve moving members.

## Description

### FIELD OF THE INVENTION

The present invention relates to a solenoid valve to control, e.g., the supply of refrigerant fluid in multicompartment refrigerators having, a fridge and a freezer and using only a single compressor.

In particular, the present invention relates to a solenoid valve control method and control apparatus for a tristable solenoid valve and further to a valve portion arrangement relying on said control method and apparatus.

### TECHNICAL BACKGROUND

Refrigerators either for household or commercial applications are very often designed to provide on the same appliance a freezer and a refrigerator compartment. This is obtained either by employing two independent refrigeration circuits with two compressors or a single refrigeration circuit with one compressor working in conjunction with a solenoid valve having the function to divert the refrigerant to the compartment requiring cooling. To save space, limit the energy consumption and decrease the appliance cost, the single compressor solution with a diverting valve is the preferred solution though, as explained further on, it has some limitation with respect to a system with two compressors.

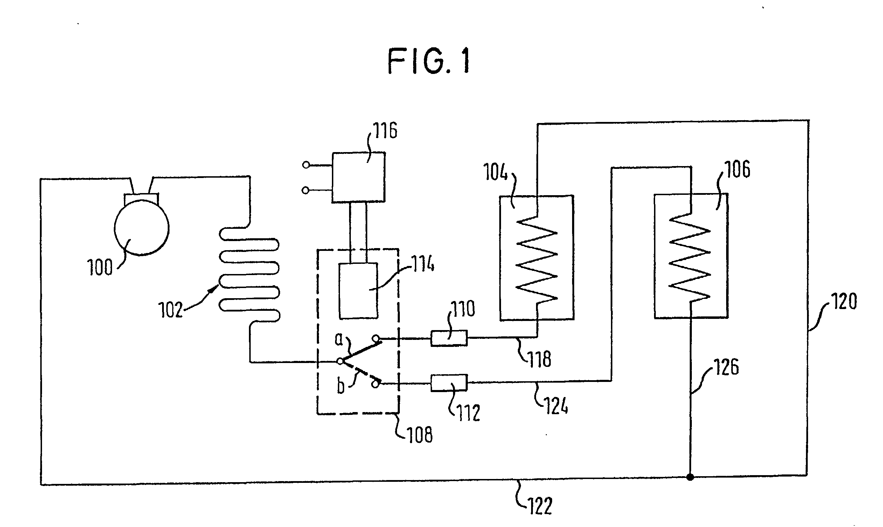

Fig. 1 describes a typical refrigeration system consisting of a single compressor 100, a condenser 102, a first evaporator 104, for instance placed in the freezer compartment, and a second evaporator 106, for instance placed in the refrigerator compartment.

As shown in Fig. 1, a solenoid valve 108 diverts the refrigerant fluid from the condenser 102 output to either the freezer evaporator 104 or the refrigerator evaporator 106 via the capillary restrictions 110 and 112. The solenoid valve 108 is actuated via an actuating element 114 such as a magnetic coil and the current supply to the coil is controlled by a control unit 116.

The first operative position of the valve 108 is in a first working position indicated in Fig. 1 by a solid line (a) where the output of the condenser 102 is connected to the first evaporator 104. A further dashed line (b) in Fig. 1 relates to a second working position where the output of the condenser 102 is connected to the second evaporator 106.

Fig. 1 represents an application where the two evaporators 104, 106 are fed independently with refrigerant in dependence of the solenoid valve working position.

As shown in Fig. 1, in the first working position the refrigerant fluid expands in the first evaporator 104 via conduits 110, 118, and returns to the compressor 100 via paths 120, 122. In the second working position the fluid expands in the second evaporator 106 via conduits 112, 124 and returns to the compressor via paths 126, 122.

An alternative application not shown explicitly in Fig. 1 is one where both evaporators 104 and 106 are fed with refrigerant in cascade in the first working position. Here, both evaporators may not be operated independently.

To save energy, an auspicable feature on refrigeration systems is the capability to maintain the condenser 102 pressure, accumulated during the run period of the compressor, whenever the compressor is switched off as a result of having achieved the desired temperature in the compartments.

However, in the refrigeration system shown in Fig. 1 the condenser pressure is allowed to equalize during the compressor-off time so that, at the resuming of the cooling cycle, a certain amount of running time of the compressor will be necessary to build-up a pressure differential sufficient to initiate an effective cooling of the compartments.

This inevitably results in a waste of energy quantified from 5 to 15% depending on the system design and size.

While devices capable of maintaining the pressure during the off-time of the compressor are, e.g. known from EP 0,246,465 such devices require a solenoid valve having two coils. Further, each of such coils must be permanently energized to allow the expansion of refrigerant into the evaporator(s). When the coils are de-energized the condenser pressure is maintained. The device described in EP 0,246,465 has the disadvantages in that two coils are needed thus increasing costs. Also, the coils must permanently be energized when the compressor is switched on thus increasing energy consumption, to the point the energy saving due to the preservation of condenser pressure at switch-off condition is virtually neutralized.

### SUMMARY OF INVENTION

In view of the above one object of the present invention is to operate a tristable solenoid valve with minimum energy in a stable manner.

According to the present invention this object is achieved though a method for controlling a solenoid valve having the features of claim 1.

The control method according to the present invention drives a multi-state solenoid valve with a core element having a single coil only for magnetisation of the core element. Further, a member with at least one permanent magnet defining a first and second magnetic pole region is arranged with respect to the core element such that a relative movement between a member with the permanent magnet and the core element is possible.

In addition, the solenoid valve may comprise stopper means for limiting the relative movement of the core element and the member with the at least one permanent magnet between a first and a second limit stop position. According to the present invention different working positions in the solenoid valve are maintained stable without further supply of energy to the coil in the core element which - in other words - is only energized to move the element with the at one least permanent magnet. This is achieved in that in each of the different working positions the magnetic field flux of the permanent magnet closes over the core element generating stable state conditions.

Further, in the left limit stop position and the right limit stop position the member having at least one permanent magnet is moved slightly out of the related equilibrium position where its magnetic field flux fully closes over the core element. Therefore, there is the tendency of the member having the at least one permanent magnet to move towards this equilibrium position. However, because the member with the at least one permanent magnet abuts, to the stopper means a force or torque at either of the left and right limit stop position is generized and used to define stable state conditions.

Using the structure of the solenoid valve described so far the control method allows to achieve six different transitions, i.e. left stop position to right limit stop position, right stop position to left stop position, left stop position to intermediate stop position, right stop position to intermediate stop position, intermediate stop position to right stop position, and intermediate limit stop position to left stop position.

The various stop positions are generally achieved by energizing the coil with short positive or negative pulses of appropriate polarity generated by a rectifier element under control of a control unit to bring the valve element into selected stop positions. In particular, the intermediate stop position is obtained through supply of a short sequence of pulses which energy content is determined as a function of the inertia and self-resonance characteristics of the solenoid valve moving members.

An important advantage of the inventive method is that pulse polarity, pulse energy and the number of pulse supplied to the coil of the solenoid valve core are selectable so that pulse trains of appropriate form are used for each transition from one stable position to another according to the refrigerator (system) requirements.

In other words, it is the combination of self-stabilizing stop positions - i.e., left, middle/intermediate, right - in combination with freely configurable pulse trains for stop position transitions that allows for a stable, flexible operation of the solenoid valve while minimizing energy requirements. Also the free configuration allows for calibrated energy pulses to be supplied to the coil during a transition to the intermediate stop position to avoid overshoot and/or unwanted oscillations.

According to another embodiment of the present invention when moving the member from the intermediate stop position to either the left or right stop position a residual magnetisation compensation pulse is supplied to the solenoid coil before the specific pulse train intended to achieve the desired position is generated.

The use of the residual magnetisation compensation pulse allows to achieve reliable transition away from the intermediate stop position irrespective of the bias caused by the hysteresis of the magnetic circuit of the solenoid valve.

According to yet another preferred embodiment of the present invention pulse energy and pulse polarity of the pulses supplied to the coil of the core element are controlled according to settings pre-stored in a memory of a control unit. These settings pre-stored in the memory of the control unit may also be varied according to operative conditions of the solenoid valve.

Therefore, the control method according to the present invention may easily be adapted to different types of solenoid valves through modification of the memory contents. Still further, when the characteristics of a solenoid valve change over time due to wear or amended application requirements this may easily be taken into account thus increasing applicability and life cycle time of the solenoid valve.

According to yet another preferred embodiment of the present invention the pulses supplied to the coil of the solenoid valve core are derived from an alternating supply signal using a first microprocessor controlled rectifier for pulses having a first polarity and a second microprocessor controlled rectifier for pulses having a second polarity. Each single pulse energy of the supplied pulses is then determined by phase chopping.

Therefore the different pulse forms necessary for the different stop position transitions may be derived from, e.g., a mains frequency for either positive or negative pulses, phase chopped positive and negative pulses or any suitable combination thereof. By using a microprocessor it is possible to use the memory, timers and counters to generate pulse trains of any shape.

According to yet another preferred embodiment of the present invention the pulses supplied to the coil of the solenoid core are derived from an alternating supply signal - such as the mains voltage - through zero-crossing detection of the alternating supply signal, comparing the pulse polarity following the detected zero-crossing of the alternating supply signal with a required pulse polarity, waiting for the a subsequent zero-crossing of the alternating supply signal when the pulse polarity following the detected zero-crossing of the alternating supply signal is not in compliance with the required pulse polarity, and - as soon as the detected zero-crossing of the alternating supply signal is in compliance with the required pulse polarity-activating a bi-directional rectifier like a TRIAC such that required pulse energy is determined by phase chopping.

The zero-crossing detection according to the present invention again relies on the use of existing microprocessor features but with additional functionality in the form of, e.g., software that allows to identify positive or negative supply signal half waves. In particular, the present invention makes use of multi-functional port pins available in modern microprocessors which may be configured for input, output, or special functions. The special function used according to the present invention is the generation of an interrupt in case of a zero-crossing of the supply signal. When the interrupt is generated the input signal at the related input port is scanned to determine whether the supply signal becomes negative or positive.

Since the polarity is determined by the microprocessor the two thyristors referred to above may be substituted by only a single bi-directional rectifier, e.g., a TRIAC so as to save one circuit component. When the correct polarity is determined by the microprocessor the bi-directional rectifier may be triggered immediately. Otherwise the bi-directional rectifier is triggered at the next or subsequent zero crossing point.

The same advantages as outlined above are also achieved with an apparatus for controlling a solenoid valve having the feature according to one of the claims 12 to 18.

Another object of the present invention to provide a valve portion arrangement with improved sealing capability at fluid outlets.

This object is achieved with a valve portion arrangement having the features of claim 19.

Therefore one important advantage of the valve portion arrangement according to the present invention is that it may be operated by a solenoid valve having only a single coil thus achieving low costs.

Further, since the single solenoid is pulse operated energy saving is achieved as for the different operative positions in the valve portion arrangement no continuous supply of energy is necessary.

Another important advantage of the valve portion arrangement according to the present invention is that the pressure of the fluid supplied via the fluid inlet orifice contributes to keep the first fluid outlet orifice and the second fluid outlet orifice tightly closed so as to achieve a more reliable function of the valve portion arrangement.

Yet another important advantage of the valve portion arrangement according to the present invention is that unbalanced pressure drops in the system being connected to the valve portion arrangement do not affect the function thereof. This allows to increase the flexibility in system design.

A preferred embodiment of the valve portion arrangement according to the present invention comprises a stationary stopper in the valve chamber defining the second and the third operative position of the spring actuating element.

The provision of a stopper allows to increase stability in particular for the right and left operative position of the valve portion arrangement.

According to another preferred embodiment of the present invention there is provided a computer program product directly loadable into the internal memory of a microprocessor comprising software code portions for performing the inventive control process when the product is run on a microprocessor.

Therefore, the present invention is also provided to achieve an implementation of the inventive method steps on computer or processor systems. In conclusion, such implementation leads to the provision of computer program products for use with a computer system or more specifically a microprocessor comprised in, e.g., a solenoid valve control apparatus as defined in claims 12 to 18.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or internet and/or telephone networks via modems or other interface devices. It should be understood that such media, when carrying processor readable instructions implementing the inventive concept represent alternate embodiments of the present invention.

### DESCRIPTION OF DRAWING

In the following, preferred embodiments not to be interpreted as restricting the scope of the present invention will be described with reference to the enclosed drawing in which:
- Fig. 1: shows a schematic diagram of a single compressor refrigerator system having two evaporators which are supplied independently from each other;
- Fig. 2: shows the basic solenoid valve structure underlying the different embodiments of the present invention;
- Fig. 3: shows a construction of a solenoid valve of the rotary type in a first stable working position;
- Fig. 4: shows a second stable working position for the solenoid valve of the rotary type;
- Fig. 5: shows a third stable working position for the solenoid valve of the rotary type;
- Fig. 6: shows a construction of a solenoid valve of the linear movement type according to the present invention in a first stable working position;
- Fig. 7: shows a second stable working position of the solenoid valve of the linear movement type shown in Fig. 7;
- Fig. 8: shows a third stable working position of the solenoid valve of the linear movement type shown in Fig. 7;
- Fig. 9: shows a state transition diagram for working position transitions in the solenoid valve and related pulse forms according to the present invention;
- Fig. 10: pulse forms with residual magnetization compensation pulses according to the present invention;
- Fig. 11: a flow chart for the solenoid valve control method according to the present invention;
- Fig. 12: a state transition table for the working position transitions shown in Fig. 9;
- Fig. 13: a circuit diagram for a solenoid valve control apparatus according to the present invention;
- Fig. 14: a flow chart of a polarity evaluation method according to the present invention;
- Fig. 15: a circuit diagram for a further solenoid valve control apparatus according to the present invention;
- Fig. 16: a circuit diagram of a full-bridge rectifier circuit used to generate uni-directional pulses according to the present invention;
- Fig. 17: a schematic view of a valve portion arrangement according to the present invention;
- Fig. 18: a schematic view of a further valve portion arrangement according to the present invention;
- Fig. 19 to 21: the application of the valve portion arrangements shown in Fig. 17 and 18 to a refrigerator having two compartments being actuated (independently) selectively; and
- Fig. 22 to 24: the application of the valve portion arrangement shown in Fig. 17 and 18 to a refrigerator where the two compartments can be activated simultaneously in cascade.

### DESCRIPTION OF PREFERRED EMBODIMENTS

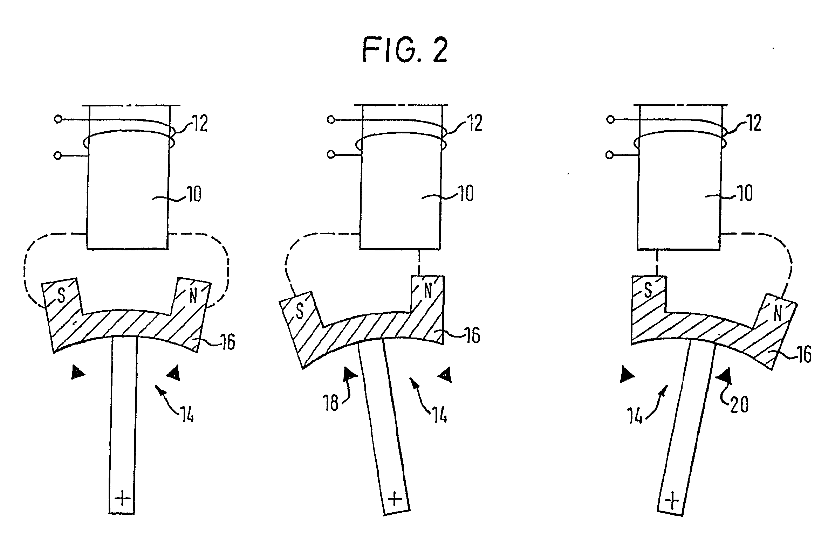

Fig. 2 shows the basic principle of the solenoid valves to be controlled; it should be noted that while Fig. 2 relates to a rotary type of solenoid valve the basic principle described with respect thereto may easily also be adapted to a solenoid valve of the linear movement type, as will be outlined herein further below.

As shown in Fig. 2, the approach underlying the present invention relies on three stable positions or equilibrium states of an arrangement comprising at least a core element 10 having a coil 12 and a member 14 having a permanent magnet 16. The permanent magnet defines a first and second magnetic pole region N and S, respectively, of the member 14. In addition, the member 14 and the core element 10 are arranged such that a relative movement between the member 14 and the core element 10 is possible.

As shown in Fig. 2, this arrangement allows for three stable working positions. In the first position shown on the left side the magnetic field flux of the permanent magnet 16 is closed over the lower part of the core element 10 while the pole regions N and S of the permanent magnet are arranged symmetrically with respect to the center axis of the core element.

Further, in the second working position shown in the middle part of Fig. 2 the magnetic field flux of the permanent magnet 16 is closed such that it is again closed over the core element, however, with a first pole region, e.g., the N pole tending to align with the center axis of the core element 10.

Still further, in the third stable working position shown in the right part of Fig. 2, the magnetic field flux is also closed over the core element 10, however, this time with the other magnetic pole piece, e.g., the S pole tending to align with the center axis of the core element.

It is important to note that all these three working positions are maintained without continuous supply of energy to the coil 12. The reason for the coil 12 is to achieve a transition between the different working positions. Heretofore, it is necessary to temporarily excite the coil so as to achieve a magnetization of the core element 10 which is not maintained permanently as will be discussed in detail herein below.

One option would be, e.g., for a transition from the intermediate stop position to the left stop position that the pole piece of the core element 10 is temporarily changed to the S pole so that the N magnetic pole region of the permanent magnet 16 is attracted.

Equivalently, to achieve a transition between the intermediate and the right stop position in Fig. 2, the lower part of the core element 10 would temporarily be magnetized into a magnetic N pole so as to attract the magnetic pole region S of the permanent magnet 16.

Still further, it should be mentioned that the three different stop positions - left, intermediate/middle, and right - shown in Fig. 2 have a natural tendency to achieve a stable position in which no further forces or torques are exerted onto the member with the permanent magnet.

Nevertheless, for the applications outlined above with respect to the background art of the present invention it might be necessary that in particular at the left and right stop the member with the permanent magnet is not only maintained in a stable state but also exerts a certain force or torque onto other construction elements of the solenoid valve.

For this reason, there may be provided a left or first stopper 18 and a right or second stopper 20. These stoppers 18, 20 allow to restrict the movement of the member 14 with the permanent magnet such that in the left and right stop position the member 14 is not moved into the actual equilibrium state but is stopped shortly before reaching this state.

Also, there will remain a tendency of the member 14 to move further into the equilibrium state shown in the left and right stop position in Fig. 2. This tendency to move further will result into a torque that is executed through the member 14 onto those construction elements being connected thereto.

In the following, the basic principle outlined with respect to Fig. 2 will be described in more detail for a solenoid valve of the rotor type and the linear movement type. Throughout the following description those elements being related to the ones described with respect to Fig. 2 will be denoted using the same reference numerals for ease of explanation.

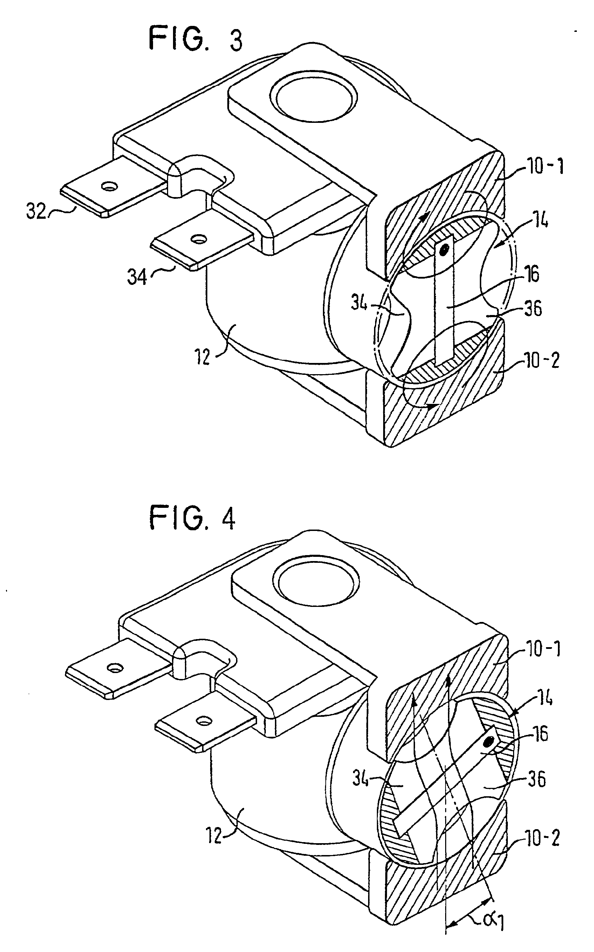

As shown in Fig. 3, the solenoid valve of the rotor type comprises a core element 10-1, 10-2 and the coil 12 for excitation of the core element 10-1, 10-2. The member 14 with the permanent magnet 16 is connected via a shaft for closing the outlets of a valve chamber (not shown) in accordance with the working position of the rotor 14. To change the different working positions, the core element 10-1, 10-2 is excited through the coil 12 through supply of current thereto via terminals 32, 34, respectively.

As shown in Figs. 3 to 5 for the solenoid valve of the rotor type the core element 10 has a specific structure with two separate pole pieces 10-1, 10-2 facing each other to form a rotor space therebetween to accommodate the member 14 with the permanent magnet.

Here, the member 14 is a rotor comprising the permanent magnet 16. Further, the rotor 14 comprises pole extensions 34, 36 in contact with the poles of the permanent magnet 16 to achieve optimized interaction between the permanent magnet 16 and the core element 10.

The core element 10 has two separate pole pieces 10-1, 10-2 facing each other to form a rotor space therebetween to accommodate the rotor. Also, the pole extensions 34, 36 extend beyond the permanent magnet and have two concave recesses that are diametrically opposed. The form of the recesses and the pole extensions is chosen such that the solenoid valve is optimized with respect to certain operation conditions, e.g., the torque that should be exerted on the sealing element to close either of the chamber outlets.

While in Fig. 2 the basic principle of the present invention has been explained with the core element having only one pole according to the solenoid valve of the rotor type there are provided two pole pieces 10-1, 10-2 to increase the amount of torque that may be exerted through the member with the permanent magnet.

Operatively, the solenoid valve of the rotor type has three stable working or stop positions. As shown in Figs. 3 to 5 the different stop positions differ in the way the magnetic field flux concatenates in the magnetic circuit. To better identify the various working positions a black dot has been added to one end of the permanent magnet 16 in Fig. 3-5.

The first stop position is related to the intermediate stop position shown in Fig. 2 where the magnetic flux of the permanent magnet 16 concatenates over the single poles of the core element, i.e. via 10-1 and 10-2.

Further, according to the working position shown in Fig. 4, with the coil not energized the flux of the permanent magnet 16 flows from the lower to the upper side as shown by the arrows in Fig. 4, i.e. in the direction south/north.

Because the rotor is forced by a stopper (not shown) to stop at an angle α1 with respect to the vertical axis, the magnetic flux is somewhat distorted from the equilibrium point which will correspond to magnetic flux lines running along a straight line from the north to south.

This is a deliberate expedient to generate a clockwise torque to ensure that a related outlet is closed with a given amount of force. Further, in case the coil is energized, e.g., by a current generating a upper pole piece with south polarity and a lower pole piece with north polarity, an even stronger clockwise torque may be generated maintaining the member 14 in the position as shown in Fig. 4.

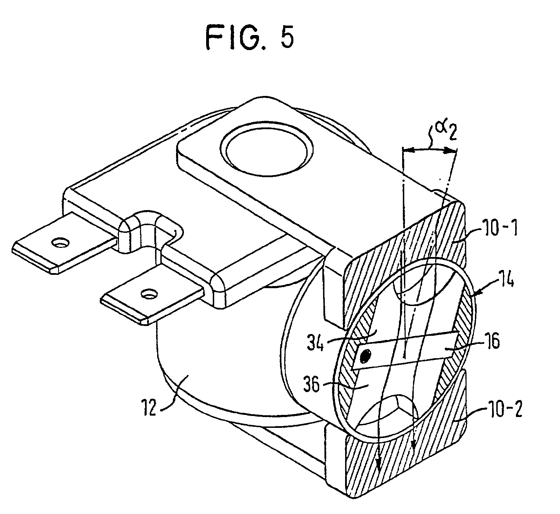

Fig. 5 shows the situation corresponding to the left stop position shown in Fig. 2 with the only difference that here the torque is generated in a counter-clockwise direction.

By inverting the current polarity in the coil 12, the upper and lower pole pieces of the core element 10 will also invert their magnetic polarity subjecting the element with the permanent magnet to a clockwise or counter-clockwise rotation due to the attractive/repulsive effect that the pole pieces 10-1, 10-2 exert on the pole extensions 34, 36.

In consequence, the rotor 14 assumes the position illustrated either in Figs. 4 and 5 at which point the coil energization may be terminated. In both positions the member 14 rests against stoppers to stop at an angle of either α1 or α2 relative to the vertical axis.

As shown in Fig. 3 and already outlined above, the rotor 14 may also assume an intermediate stop position that lies between those shown in Figs. 4 and 5. In this intermediate stop position the permanent magnet 16 is substantially oriented vertically with the magnetic flux line concatenating around adjacent pole pieces 10-1, 10-2. In this intermediate stop position both valve outlets are open allowing the fluid to be supplied into the valve chamber and then to flow out via both valve outlets at the same time.

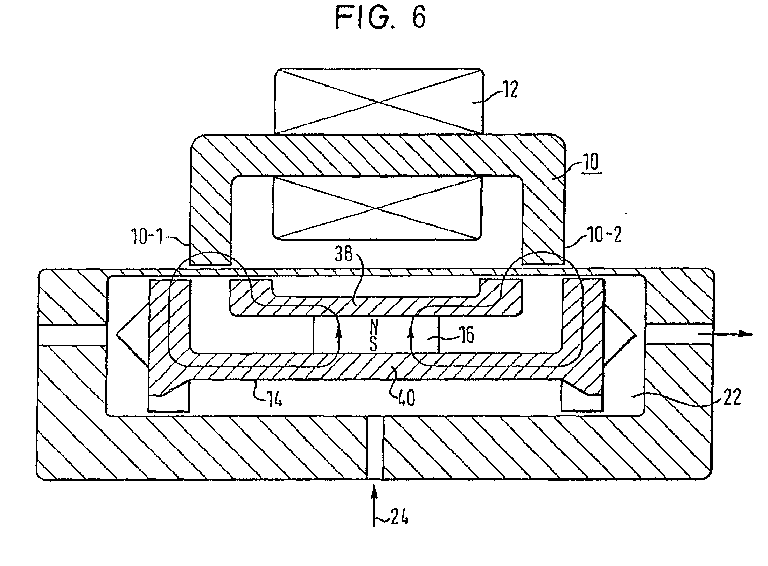

In the following, a solenoid valve according to the linear movement type to be controlled according to the present invention will be explained with respect to Figs. 6 to 8. In these Figs. 6 to 8, functional units having the same function as outlined above are denoted using the same reference numerals.

As shown in Fig. 6, the valve element 14 is a sliding element adapted to carry out the reciprocal linear movement relative to the core element 10 in a valve chamber 22. For the solenoid valve of the linear movement type the pole extension of the sliding element comprises a first U-shaped part 38 and a second U-shaped part 40 protruding outside the first U-shaped part 38. The U-shaped parts 38, 40 are in contact with the pole faces of the permanent magnet 16. The core element 10 comprises a U-shaped yoke 10 carrying the coil 12 and the end of the U-shaped yoke face the end of the U-shaped pole extensions 34, 40 of the member with the permanent magnet.

As shown in Fig. 6, in the intermediate stop position of the solenoid valve the magnetic flux generated through the permanent magnet is guided to the pole piece of the yoke 10 via the U-shaped parts 38, 40, respectively, and closes via the single pole pieces 10-1, 10-2 of the yoke without supply of energy to the coil 12.

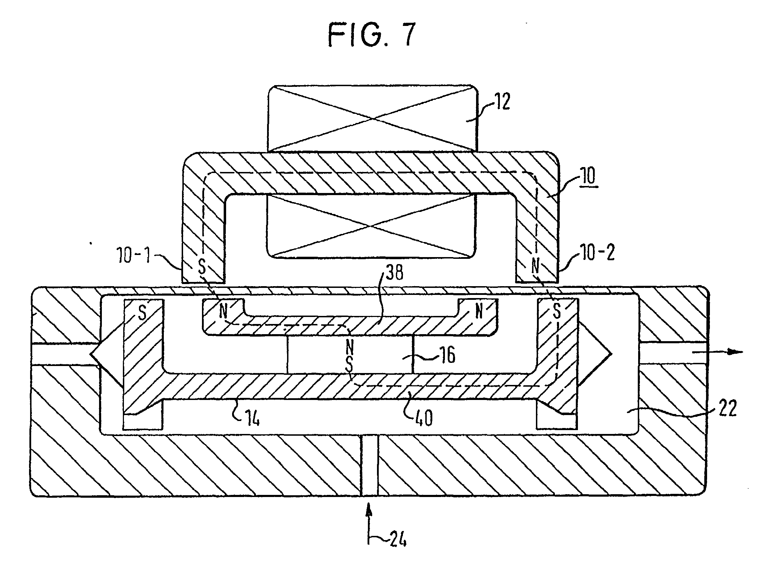

As shown in Fig. 7, to bring the solenoid valve and the valve element comprised therein into the position with closed left outlet of the valve chamber 22, the yoke is magnetized such that the pole piece 10-1 has, e.g., S-polarity and the pole piece 10-2 has N-polarity. Therefore, at the left side there is exerted an attraction force onto the upper U-shaped part 38 and a repulsion force onto the lower U-shaped part 40. Accordingly, at the right side there is exerted a repulsion force between the pole piece 10-1 of the yoke 10 and the related upper U-shaped part 38 and further an attraction force to the lower U-shaped part 40. Once the valve element is moved into a position where the left outlet is closed, no further energy will be supplied to the coil 12 and the magnetic flux will close along the dashed line shown in Fig. 7 so as to maintain this position as stable working position.

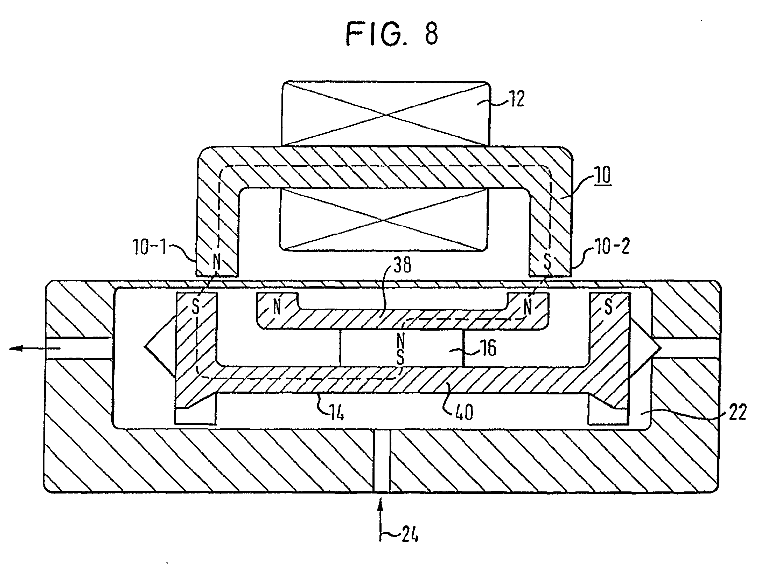

The same principles as outlined with respect to Fig. 7 apply to the Fig. 8 being related to the closed right outlet of the valve chamber 22. The only difference is that here the pole pieces 10-1 and 10-2 have reversed magnetic polarities for movement of the member 14 to the righthand side.

Again, once the right valve outlet is closed, the magnetic field flux generated by the permanent magnet 16 closes along the dashed line shown in Fig. 8 so as to maintain the working position without further supply of the energy to the coil 12.

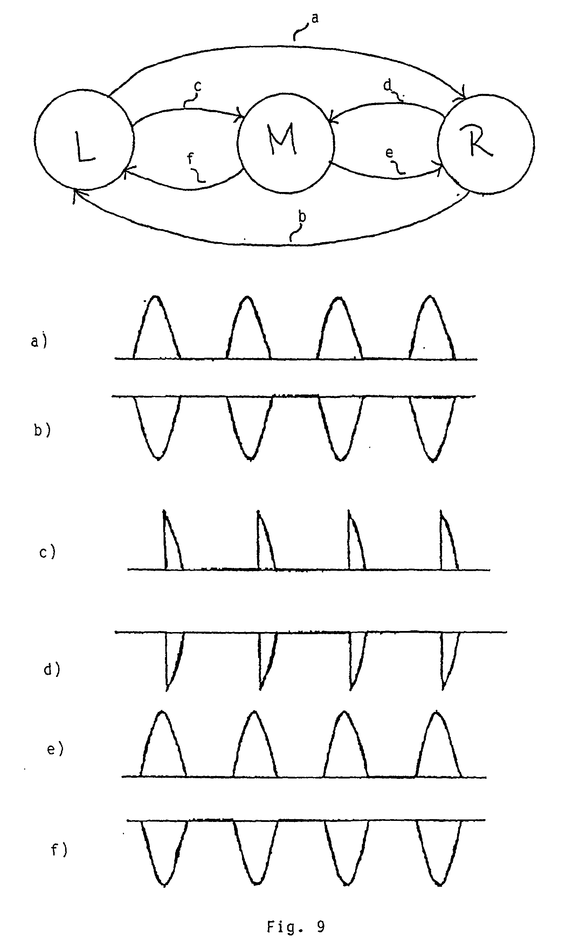

As shown in Fig. 9, the different transitions between a plurality of working positions described above with respect to the solenoid valve of the rotary type of the linear movement type may be formerly described by a state transition diagram.

As also shown in Fig. 9, there exist six different state transitions according to the transitions between the different stop positions in the solenoid valve: From the left stop position to the right stop position LR (a), from the right stop position to the left stop position RL (b), from the left stop position to the intermediate stop position LM (c), from the right position to the intermediate stop position RM (d), from the intermediate stop position to the left stop position NL (f), and from the intermediate stop position to the right stop position MR (e).

As is also shown in the lower part of Fig. 9 the movement of the member to the right stop position R is achieved through supply of pulses having positive polarity and a specific pulse energy to the coil of the co-element. The movement of the member 14 to the left stop position is achieved through supply of pulses having negative polarity and a specific pulse energy to the coil 12 of the core 10.

As also shown in Fig. 9, the transitions from the left stop position and the right stop position to the intermediate stop position are also achieved through supply of pulses with either positive or negative polarity, however, with reduced energy when being compared to the pulse energy used for the previous discussed state transitions.

Once the intermediate stop position is achieved through supply of pulses with reduced energy to avoid overshooting and/or oscillations, a movement back to the left or right stop position is again achieved through supply of pulses with either positive or negative polarity and the same energy as used for the transition from the left stop position to the right stop position or from the right stop position to the left stop position, as shown in Fig. 9 (e) and (f).

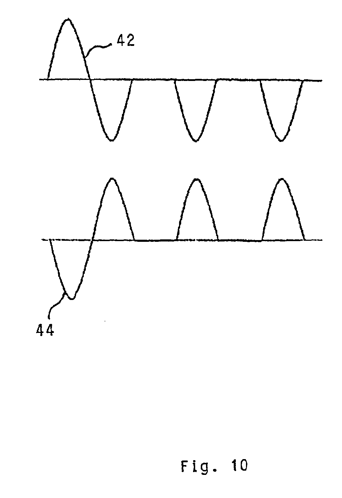

Fig. 10 shows pulse forms achieving residual magnetisation compensation according to the present invention. In particular, when moving from the intermediate stop position the residual magnetisation of the core-element must first be compensated for before of the movement of the member 14 to either the left or right stop position.

As shown in Fig. 10 this is achieved through supply of residual magnetization compensation pulses 42 and 44 having opposite polarity in comparison to the subsequent pulses achieving the actual transition. Here, the pulse form according to the upper part of Fig. 10 relates to the movement from the intermediate stop position to the left stop position while the lower part of Fig. 10 is related to the transition from the intermediate stop position to the right stop position.

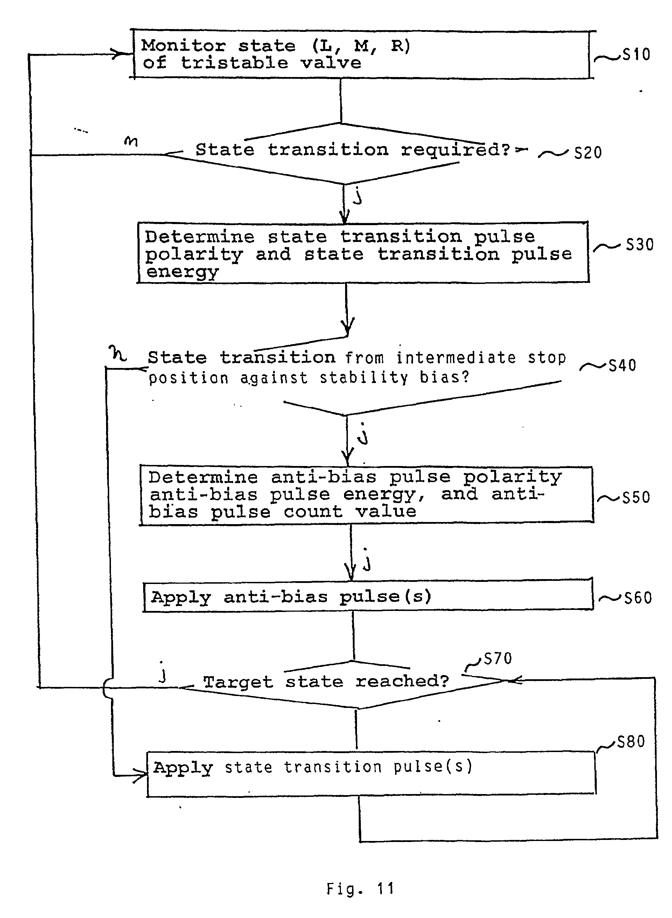

Fig. 11 shows a flow chart for the solenoid valve control method according to the present invention.

Initially, the state in the tri-stable solenoid valve is monitored in step S10 and an interrogation is repeatedly carried out to check whether a state transition between different stop positions is required in step S20. If this is not the case, the monitoring of the stop position in the solenoid tri-stable valve is repeated until a request for a state transition occurs. In this case, the necessary pulse polarity, pulse energy and pulse count is determined to achieve the requested state transition in compliance with the actual stop position and the target stop position in step S30. Further, in step S40 an interrogation is carried out to check whether the member 14 of the solenoid valve is moved from the intermediate stop position to either the left or right stop position in step S40.

As shown in Fig. 11, in case the member 14 is indeed moved starting from the intermediate stop position then a necessary pulse polarity, pulse energy, and pulse count to achieve the residual magnetization compensation is determined in step S50. Subsequent to the determination of the pulse form required for residual magnetization compensation in step S50 the determined pulse form is immediately applied for residual magnetization compensation in step S60.

As also shown in Fig. 11, subsequent to step S60 there is carried out an interrogation whether the target state is already reached or not in step S70. Ifs this is not the case, a pulse form of appropriate characteristic as shown in Fig. 9 is then supplied to the coil 12 of the core 10 to achieve the requested state transition. Also, it should be noted that unless a transition is carried out starting from the intermediate stop position, steps S50, S60 and S70 are skipped so that the application of the required pulse form is carried out immediately starting from the interrogation in step S40.

While in the flow chart shown in Fig. 11 a monitoring of the state in the solenoid valve and an interrogation whether the target state is reached are shown the present invention is not restricted to such a procedure. To the contrary, in case the behaviour of the solenoid valve and the characteristics thereof are known in advance and do not change over time the pulse form necessary to achieve state transitions and residual magnetisation compensation may be determined in advance. In the latter case, it is then known per se which pulse form achieves what transition so that monitoring of each transition becomes obsolete.

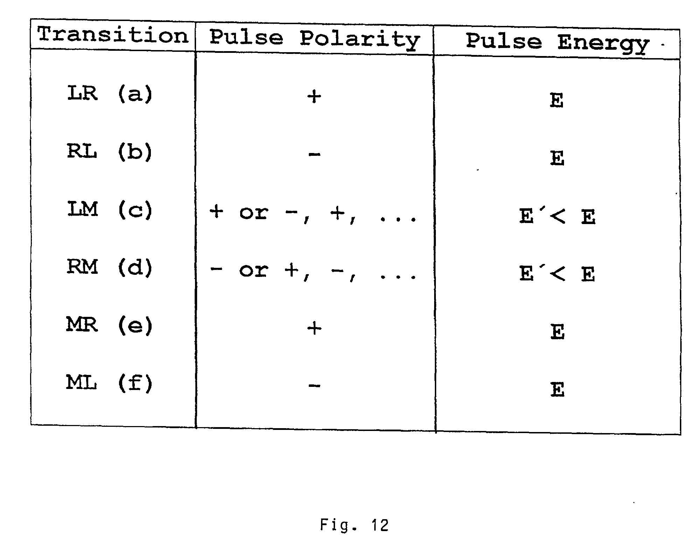

Fig. 12 shows a state transition table for the stop position transitions shown in Fig. 9.

As shown in Fig. 12 and already discussed with respect to Fig. 11 for each transition there may be specified a certain pulse form by the pulse polarity, the pulse energy and the pulse count. Therefore, the state transition table shown in Fig. 12 allows to achieve any form of pulse train for application to the coil of the solenoid valve. In other words, while Fig. 9 shows sinusoidal half waves a form of such waves may be as well rectangular, trapezoidal, stepwise or whatever is desirable for a specific application. Also, the relative relationship of the pulse polarities is not restricted to the particular form shown in Fig. 9 and 12, respectively, but may as well be reversed for a coil with different winding orientation. Still further, also the pulse energies need not necessarily have the values outlined so far but may have different values for different pulse trains over even different values within a single pulse train.

Further, it should be noted that according to the present invention the different pulse polarities, pulse energies and pulse counts must not be constant but may vary over time. This enables the adaptation of the control method to varying external conditions of the solenoid valve or a variable application thereof. Also, a change of pulse parameters allows to adapt the solenoid valve to different application scenarios therefore increasing the applicability and life cycle of the solenoid valve.

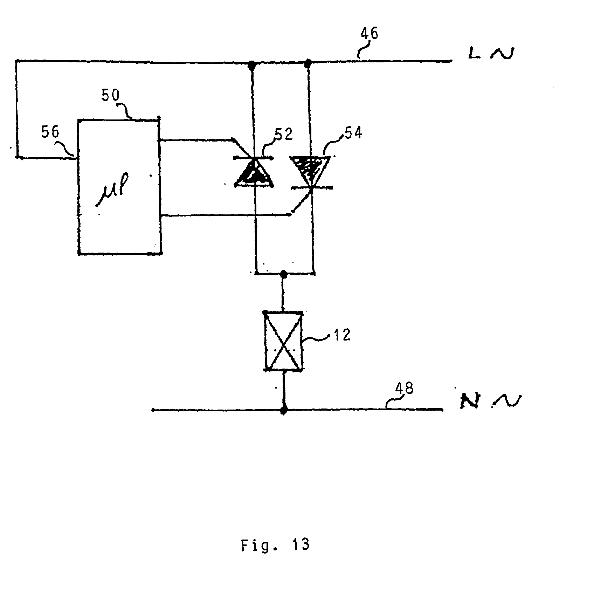

In the following different circuits used to implement the solenoid valve control method outlined so far will be discussed with respect to Figs. 13 to 16.

Fig. 13 shows a circuit diagram for a solenoid valve control apparatus according to the present invention. In particular, the reference numeral 46 denotes a first supply line and the reference numeral 48 denotes a second supply line. Further, the reference numeral 50 denotes a microprocessor, the reference numeral 52 denotes a first thyristor, and the reference 54 denotes a second thyristor.

As shown in Fig. 13, the first thyristor 52 and the second thyristor 54 are connected in an anti-parallel manner between the first power supply line 46 and a first terminal of the coil 12 of the coil element 10. The other terminal of the coil 12 is connected to the second supply line 46. Each of the first thryristor 52 and the second thyristor 54 is controlled by the microprocessor 50 being connected to the gates of the thyristor 52 and 54. Further, a first power supply line is also sampled by the microprocessor at 56.

Operatively, the microprocessor 50 sampled the power supply signal, e.g., a 230 volt AC signal, on the power supply line 46 and triggers the first thyristor 52 for a first polarity and the second thyristor 54 for a second polarity. Also, by sampling the power supply signal at 56 it is possible to determine the trigger time for each thyristor 52 and 54 and thus to control the energy of each pulse supplied to the coil 12 through phase chopping.

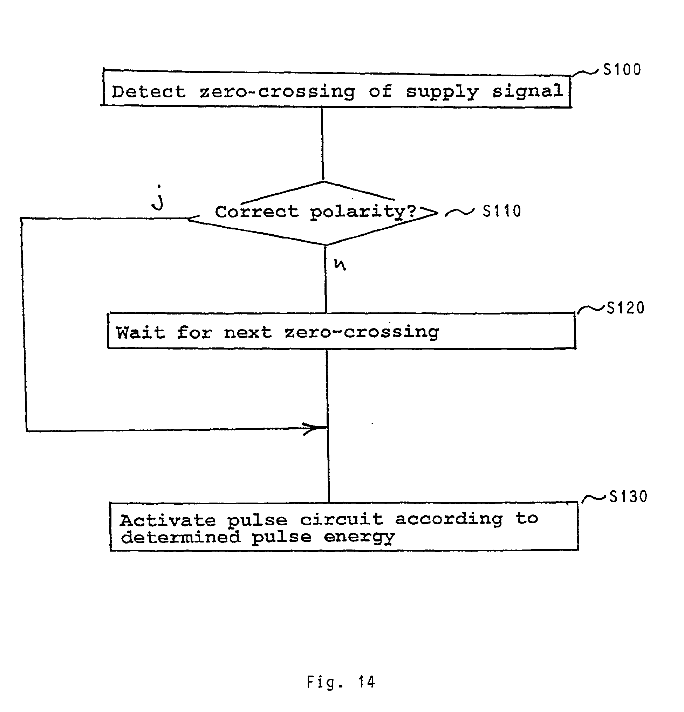

Fig. 14 shows a flow chart for a polarity evaluation method according to the present invention.

As shown in Fig. 14, one possibility to derive the necessary pulse form for supply to the coil 12 is to detect a zero crossing of the supply signal on the power supply line 46 in a step S100. Then, there follows a step 110 to check whether the polarity subsequent to the detected zero crossing is correct or not. For a correct polarity a pulse circuit is immediately activated in compliance with the necessary pulse energy in step 130. Otherwise, there is carried out a weighting step for the next zero crossing S120 or in other words one half period of the alternating supply signal is skipped until the correct polarity is supplied over the power supply line 46 for subsequent phase chopping.

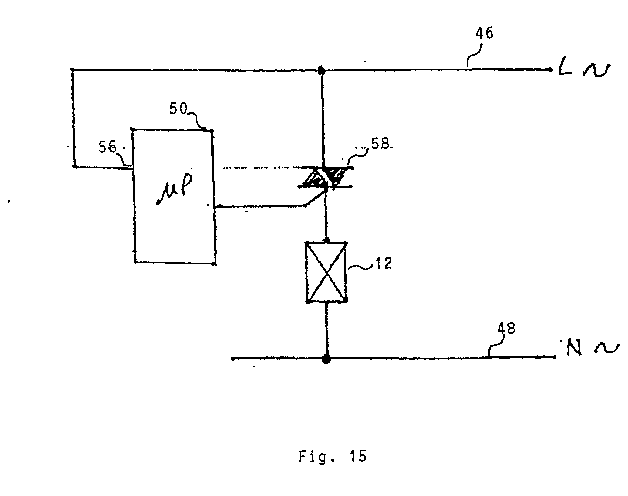

Fig. 15 shows a circuit diagram for a further solenoid valve control apparatus according to the present invention using the zero detection method previously described with respect to Fig. 14. Those parts and elements of Fig. 15 which are identical or correspond to related parts of Fig. 13 are denoted using the same reference symbols and explanation therof will be omitted to avoid redundancy.

As shown in Fig. 15, using a zero detection method according to the present invention allows to substitute the two thyristors 52 and 54 shown in Fig. 14 through a single bi-directional rectifier 58, e.g., a TRIAC which is connected between the power supply line and a terminal of the coil 12. The gate of the bi-directional coupler 58 is controlled by the microprocessor 50.

Therefore, according to the present invention it is possible to either apply the base chopping principles with a pair of thyristors or only a single tyristor. In the latter case the inventive zero crossing detection method allows to generate a pulse of appropriate polarity both for residual magnetism compensation and actual state transition within the solenoid valve.

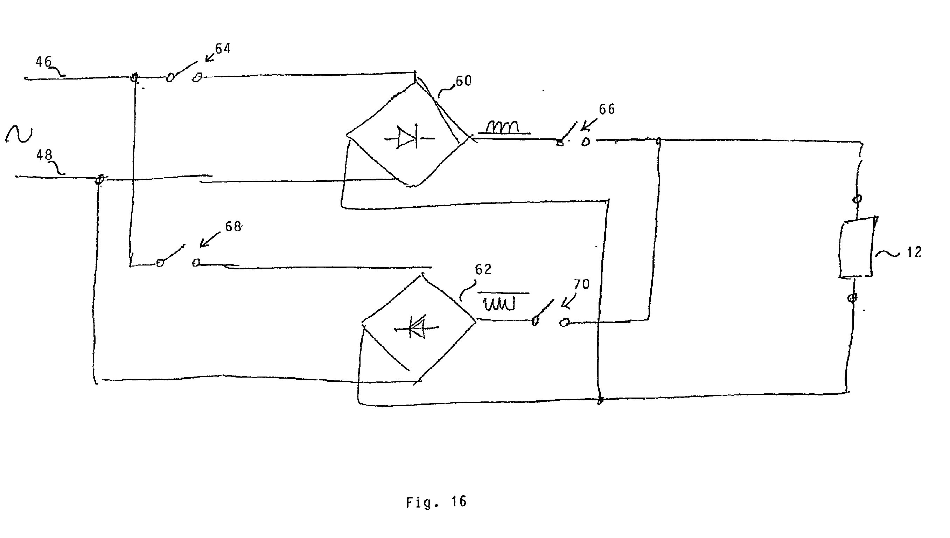

Fig. 16 shows a circuit diagram of a full bridge rectifier circuit used to generate uni-directional pulses as other possibility to overcome the residual magnetism of the solenoid valve when moving from the intermediate start position according to the present invention. In particular, the circuit shown in Fig. 16 may be used for a state transition between the intermediate stop position and the left or right stop position or from the left stop position to the right stop position or from the right stop position to the left stop position.

As shown in Fig. 16 the full bridge rectifier comprises a first bridge 60 producing pulses of positive polarity and a second bridge 62 producing pulses of negative polarity. Further, the first bridge 60 may be decoupled from the coil 12 with two switches 64, 66 when the second bridge circuit 62 is operative and the second bridge circuit 62 may be decoupled from the coil 12 with two switches 68, 70 when the first bridge circuit 60 is operative. The switches 64, 66, 68 and 70 are required to avoid short circuits in the full bridge rectifier.

Operatively, to produce positive pulses at the coil 12 the switches 64, 66 must be closed while the switches 68, 70 remain open. Further, to produce negative pulses at the coil 12 the switches 64, 66 must remain open while both switches 68, 70 are closed.

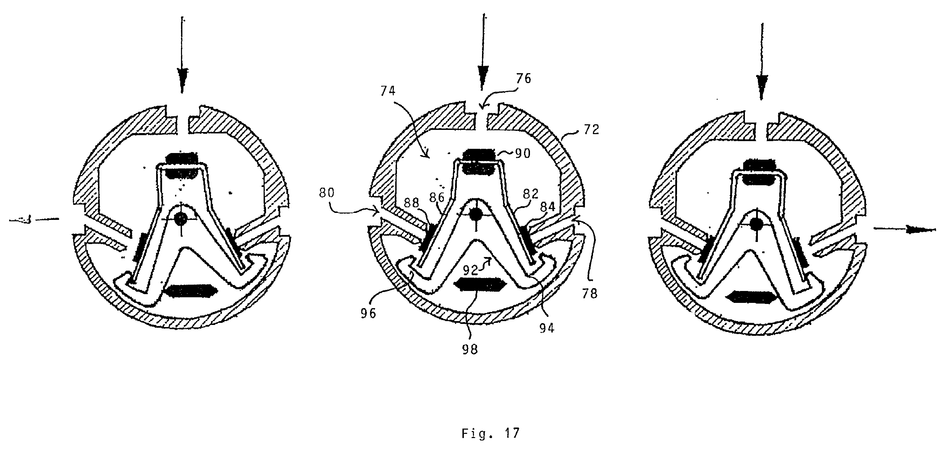

In the following, a valve portion arrangement driven by the tristable solenoid valve under control of the inventive control concept will be illustrated with respect to Fig. 17 to 24.

Fig. 17 shows a schematic view of such a valve portion arrangement according to the present invention. In particular, Fig. 17 shows the valve portion arrangement in the right, intermediate, and left stop position, respectively.

As shown in Fig. 17 the valve portion arrangement comprises a valve body 72 defining a valve chamber 74. The valve chamber 74 has a fluid inlet orifice 76, a first fluid outlet orifice 78 and a second fluid outlet orifice 80. The valve portion arrangement further comprises a first spring 82 being provided with a seal 84 to close the first fluid outlet orifice 78. The valve portion arrangement also comprises a second spring 86 being provided with a second seal 88. Both, the first spring 82 and the second spring 86 may be realized as leaf spring where each spring portion is fixed by a common leaf spring anchorage 90. As the leaf spring is spread out towards the first and second fluid outlet orifice 78, 80 they are pre-loaded against the first and second fluid outlet to achieve sufficient sealing force to keep the first and second fluid outlet 78, 80 hermetically closed during the compressor off-time. The pressure at the fluid inlet port, e.g. a refrigerant gas, cannot discharge through the fluid outlets 78, 80.

As shown in Fig. 17, to open either the first fluid outlet orifice 78 or the second fluid outlet orifice 80 there is provided a valve actuating lever also referred to as spring actuating element being movable in the valve chamber 74 through actuation by the solenoid valve outlined above. The valve actuating lever is of a V-shape having a first engagement element 94 and a second engagement 96 that operatively get in engagement with either the first spring 82 or the second spring 86 as will be described in the following. Finally, the valve portion arrangement also comprises a stopper means 98 positioned stationary within the valve chamber to limit the movement of the valve actuating lever 92.

As shown in Fig. 17, operatively the valve actuating lever 92 is movable in the valve chamber 74 through supply of appropriate pulses to the coil of the solenoid valve described above. In a first operative position according to the middle part of Fig. 17 neither the first engagement element 94 is in engagement with the first spring element 82 nor the second engagement element 96 is in engagement with the second spring element 86. This is achieved through the hook-like form of each engagement element 94, 96. Therefore, the positioning of the valve actuating leaver in the middle position leaves the first fluid outlet orifice 78 and the second fluid outlet orifice 80 closed. In addition, the pressure from the fluid inlet orifice 98 also leads to a further stabilization and increase sealing capacity in the intermediate position.

As shown in the left part of Fig. 17, in the right operative position of the valve actuating lever 92 the second engagement element 96 is in engagement with the second spring element 86 to open the second fluid outlet orifice 80 while the first engagement element 94 is out of engagement with the first spring element 82 leaving the first fluid outlet orifice 78 closed. It is the hoop-like form of the respective engagement element 94, 96 that allows to achieve this operative condition. Further, the stopper 98 allows to stabilize the position of the valve actuating lever 92 in the valve chamber irrespective of the fluid pressure between the fluid inlet orifice 76 and the second fluid outlet orifice 80.

As shown in the right part of Fig. 17, in a left operative position the first engagement element 94 is in engagement with the first spring element 82 to open the first fluid outlet orifice 78 while the second engagement element 96 is out of engagement with the second spring element 86 leaving the second fluid outlet orifice 80 closed.

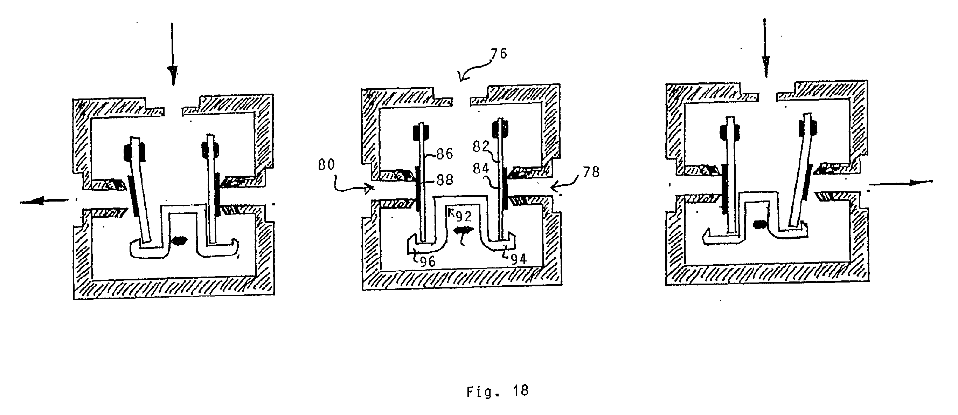

Fig. 18 shows a schematic view of another valve portion arrangement according to the present invention. Same or related parts as those shown in Fig. 17 are denoted using the same reference numerals and an explanation thereof will be omitted to avoid redundancy.

As shown in Fig. 18 the valve portion arrangement is of the linear movement type where the valve actuating lever 92 is not rotated but reciprocated. Further, the different spring elements 82 and 86 are not held by single anchorage but by a single anchorage for each single spring element 82, 86.

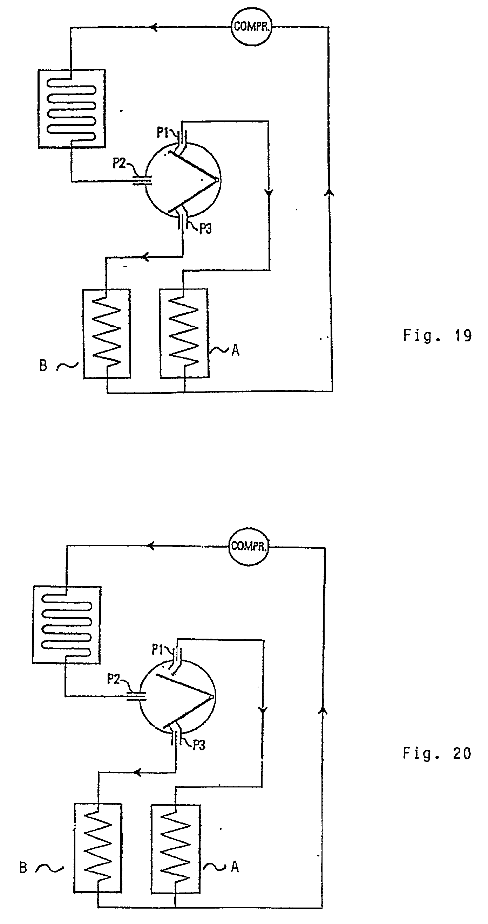

Figs. 19 to 21 show the application of the valve portion arrangements shown in Fig. 17 and 18 to a refrigerator having two evaporators being actuated selectively.

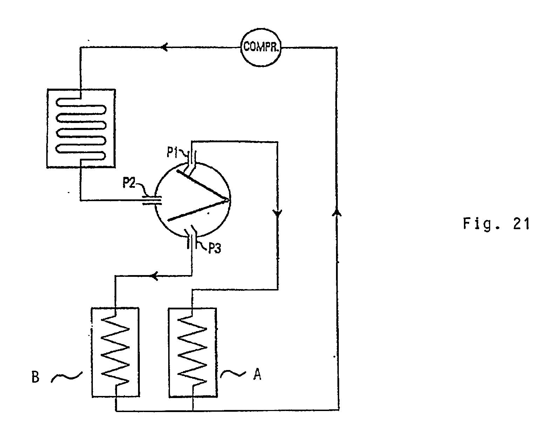

In the intermediate operative position of the valve portion arrangement shown in Fig. 19 the compressor is de-energized, and the orifices P1 and P3 are closed. Therefore, the evaporators 5A and 5B are deactivated. In the operative position according to Fig. 20 the compressor is energized and orifice P1 is opened while orifice P3 is closed. Therefore, the evaporator A is activated while the evaporator B is deactivated. In the operative position as shown in Fig. 21 the compressor is energized while orifice P1 is closed and orifice P3 is opened. Hereby evaporator B is activated while evaporator A is deactivated. In conclusion, the two evaporators may be activated separately but cannot work simultaneously.

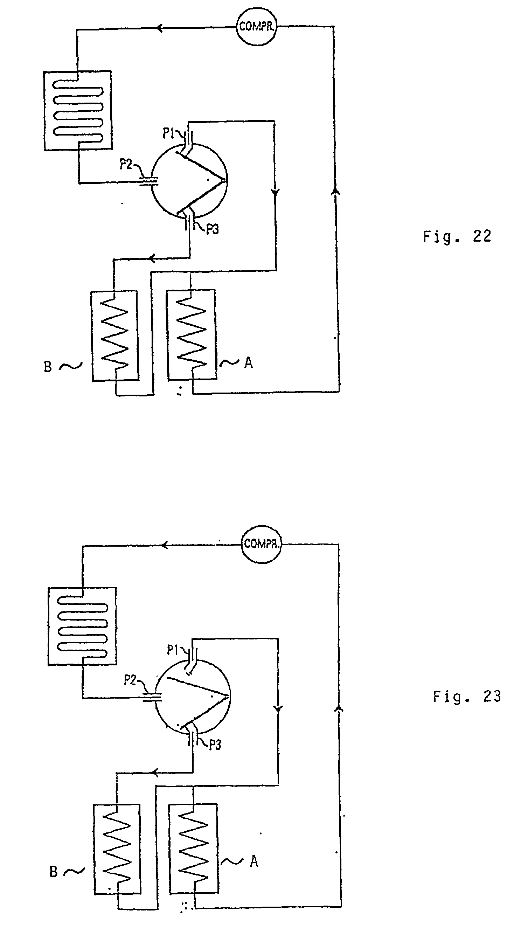

Figs. 22 to 24 show a modification that allows the two evaporators A, B to work simultaneously in cascade series.

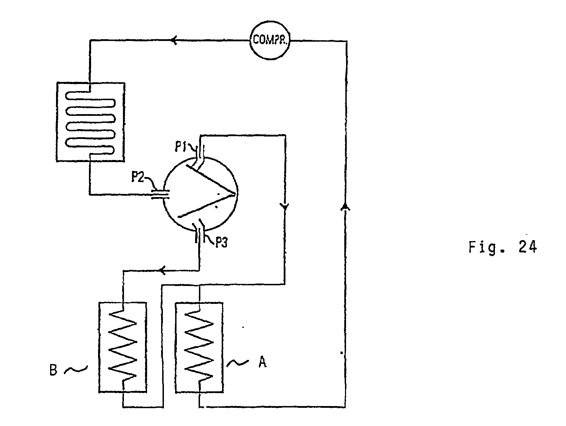

According to the operative condition shown in Fig. 22 the compressor is de-energized, orifices P1 and P3 are closed and the evaporators A and B are deactivated. According to the operative condition shown in Fig. 23 the compressor is energized, the orifice P1 is opened and the orifice P3 is closed. Hereby, only the evaporator A is activated since evaporator B is deactivated by the closure of orifice P3. According to the operative condition as shown in Fig. 24 both evaporators are supplied with cooling fluid cascade fashion through the open orifice P3.

Finally, it should be noted that while Figs. 19 to 24 show the use of the valve portion arrangement in conjunction of two evaporators it is possible to use the valve portion arrangement only with a single evaporator. In such a case, the valve portion arrangement would have two fluid outlet portions of different diameters so that in a position where the orifice with the smaller diameter is opened less fluid is supplied to the evaporator while in a position where the orifice having the larger diameter is opened more fluid is supplied to the evaporator. Therefore, the valve portion arrangement according to the present invention also allows achieve a multi-stage supply of collant fluid to a single evaporator.

## Claims

1. Method for controlling a solenoid valve comprising a core element (10) with a coil (12) for magnetising the core element (10) and a member (14) being movable relative to the core element (10) through supply of pulses of selected pulse polarity and selected pulse energy to the coil (12), the method comprising the steps:
a) moving the member (14) to a first limit stop position (R) through supply of at least one first pulse having a first pulse polarity (+) and a first pulse energy (E) to the coil (12);
b) moving the member (14) to a second limit stop position (L) through supply of at least one second pulse having a second pulse polarity (-) and a second pulse energy (E) to the coil (12);
c) moving the member (14) from the first limit stop position (R) to an intermediate stop position (M) lying between the first limit stop position (R) and the second limit stop position (L) through supply of at least one third pulse having a third energy (E') and the second pulse polarity (-) to the coil (12);
d) moving the member (14) from the second limit stop (L) position to the intermediate stop position (M) through supply of at least one fourth pulse having a fourth energy (E') and the first pulse polarity (+) to the coil (12);
e) moving the member (14) from the intermediate stop position (M) to the first stop position (R) through supply of at least one fifth pulse having a fifth energy (E) and the first pulse polarity (+) to the coil (12);
f) moving the member (14) from the intermediate stop position (M) to the second stop position (L) through supply of at least one sixth pulse having a sixth energy (E) and the second pulse polarity (-) to the coil (12).

2. Method according to claim 1, ***characterized in that*** when moving the member (14) from the intermediate stop position (M) to the first stop position (R) at least one seventh pulse having a seventh energy (E) and the second polarity (-) is supplied to the coil (12) prior to the at least one fifth pulse for residual magnetisation cancellation.

3. Method according to claim 1 or 2, ***characterized in that*** when moving the member (14) from the intermediate stop position (M) to the second stop position (L) at least one eighth pulse having an eighth energy (E) and the first polarity (+) is supplied to the coil (12) prior to the at least one sixth pulse for residual magnetisation cancellation.

4. Method according to one of the claims 1 to 3, ***characterized in that*** pulse energy and pulse polarity of the first to eighth pulses are controlled according to settings pre-stored in a memory of a control unit(50).

5. Method according to claim 4, ***characterized in that*** the settings pre-stored in the memory of the control unit(50) are variable according to operative conditions of the solenoid valv.

6. Method according to one of the claims 1 to 5, ***characterized in that*** the first to eighth pulses are derived from an alternating supply signal using a first microprocessor controlled rectifier (52) for pulses having the first polarity and a second microprocessor controlled rectifier (54) for pulses having the second polarity and that the pulse energy of the first to eighth pulse is determined by phase chopping, respectively.

7. Method according to one of the claims 1 to 5, ***characterized in that*** the first to eighth pulses are derived from an alternating supply signal through
- zero-crossing detection (S100) of the alternating supply signal;
- comparing (S100) the pulse polarity following the detected zero-crossing of the alternating supply signal with a required pulse polarity;
- waiting (S100) for the a subsequent zero-crossing of the alternating supply signal when the pulse polarity following the detected zero-crossing of the alternating supply signal is not in compliance with the required pulse polarity; and
- as soon as the detected zero-crossing of the alternating supply signal is in compliance with the required pulse polarity activating (S130) a bi-directional rectifier (58) such that required pulse energy of the first to eighth pulse is determined by phase chopping.

8. Method according to claim 1, ***characterized in that*** the fifth and sixth pulse are derived through full wave bridge rectification of an alternating supply signal.

9. Method according to claims 1 to 7, ***characterized in that*** the first, second, fifth, and sixth pulse have the same pulse energy and are applied one to four times and that the third and fourth pulse have the same pulse energy being smaller than the first, second, fifth, and sixth pulse energy and are applied one to four times.

10. Method according to claim 9, ***characterized in that*** the ratio of the third and fourth pulse energy to the first, second, third and fourth pulse energy is lying in the range of 5 % to 80 %.

11. Method according to claims 1 to 10, ***characterized in that*** seventh pulse and the eighth pulse have the same pulse energy as the first, second, fifth, and sixth pulse and are applied at least once.

12. Apparatus for controlling a solenoid valve comprising a core element (10) with a coil (12) for magnetising the core element (10) and a member (14) being movable relative to the core element (10) through supply of pulses of selected pulse polarity and selected pulse energy to the coil (12), comprising:
a) a rectifier element (52,54;58;60-70) being connected to a power supply (46, 48) of the solenoid valve and being adapted to derive pulses of selected pulse polarity and selected pulse energy from an alternating power supply signal of the power supply;
b) a control unit (50) adapted to control the rectifier element (52,54;56) for movement of the member (14) relative to the coil (12) such that
b1) the member (14) is moved to a first limit stop position (R) through supply of at least one first pulse having a first pulse polarity (+) and a first pulse energy (E) from the rectifier element (52,54;58) to the coil (12);
b2) the member (14) is moved to a second limit stop position (L) through supply of at least one second pulse having a second pulse polarity (-) and a second pulse energy (E) from the rectifier element (52,54;58) to the coil (12);
b3) the member (14) is moved from the first limit stop position (R) to an intermediate stop position (M) lying between the first limit stop position (R) and the second limit stop position (L) through supply of at least one third pulse having a third energy (E') and the second pulse polarity (-) from the rectifier element (52,54;58) to the coil (12);
b4) the member (14) is moved from the second limit stop (L) position to the intermediate stop position (M) through supply of at least one fourth pulse having a fourth energy (E') and the first pulse polarity (+) from the rectifier element (52,54;58) to the coil (12);
b5) the member (14) is moved from the intermediate stop position (M) to the first stop position (R) through supply of at least one fifth pulse having a fifth energy (E) and the first pulse polarity (+) from the rectifier element (52,54;58) to the coil (12);
b6) the member (14) is moved from the intermediate stop position (M) to the second stop position (L) through supply of at least one sixth pulse having a sixth energy (E) and the second pulse polarity (-) from the rectifier element (52,54;58) to the coil (12).

13. Apparatus according to claim 12, ***characterized in that*** the control unit (50) is adapted to control the rectifier element (52,54;58) such that prior to the at least one fifth pulse for movement of the member (14) from the intermediate stop position (M) to the first stop position (R) the rectifier element (52,54;58) outputs at least one seventh pulse having a seventh energy (E) and the second polarity (-) to the coil (12) for residual magnetisation cancellation.

14. Apparatus according to claim 12 or 13, ***characterized in that*** the control unit (50) is adapted to control the rectifier element (52,54;58) such that prior to at least one sixth pulse for movement of the member (14) from the intermediate stop position (M) to the second stop position (L) the rectifier element (52,54;58) outputs at least one eighth pulse having an eighth energy (E) and the first polarity (+) to the coil (12) for residual magnetisation cancellation.

15. Apparatus according to one of the claims 12 to 14, ***characterized in that*** the control unit (50) comprises a memory for storage of pulse energy and pulse polarity of the first to eighth pulses.

16. Apparatus according to one of the claims 12 to 15, ***characterized in that*** the rectifier element comprises a first microprocessor controlled rectifier (52) for pulses having the first polarity and a second microprocessor controlled rectifier (54) for pulses having the second polarity and that the pulse energy of the first to eighth pulse is determined by phase chopping under control of the control unit (50), respectively.

17. Apparatus according to one of the claims 11 to 15, ***characterized in that*** the control unit (50) further comprises
- a zero-crossing detector (50) adapted to zero-crossing detection of the alternating supply signal;
- a comparator (50) comparing the pulse polarity following the detected zero-crossing of the alternating supply signal with a required pulse polarity; wherein
- the control unit (50) is adapted to wait for the a subsequent zero-crossing of the alternating supply signal when the pulse polarity following the detected zero-crossing of the alternating supply signal is not in compliance with the required pulse polarity; and
- the control unit (50) is further adapted - as soon as the detected zero-crossing of the alternating supply signal is in compliance with the required pulse polarity - to activate a bi-directional rectifier (58) such that required pulse energy of the first to eighth pulse is determined by phase chopping.

18. Apparatus according to claim 12, ***characterized in that*** it further comprises a full wave bridge rectifier and that the control unit (50) is adapted to derive the fifth and sixth pulse through full wave bridge rectification of the alternating supply signal.

19. Valve portion arrangement, comprising:
a) a valve body (72) defining a valve chamber (74) and having a fluid inlet orifice (76), a first fluid outlet orifice (78), and a second fluid outlet orifice (80),
b) a first spring element (82) pre-biased with a first force against the first fluid outlet orifice (78);
c) a second spring element (86) pre-biased with a second force against the second fluid outlet orifice (80) ;
d) a spring actuating element (92) being movable in the valve chamber (74) and having a first engagement element (94) to move the first spring element (82) against the first force away from the first fluid outlet orifice (78) and a second engagement element (96) to move the second spring element (86) against the second force away from the second fluid outlet orifice (80); wherein
e) the spring actuating element (92) is positioned by a pulse operated solenoid to a first operative position (M), to a second operative position (R), and to a third operative position (L) such that
e1) in the first operative position (M) neither the first engagement element (94) is in engagement with the first spring element (82) nor the second engagement element (96) is in engagement with the second spring element (86) leaving the first fluid outlet orifice (78) and the second fluid outlet orifice (80) closed;
e2) in the second operative position (R) the second engagement means (76) is in engagement with the second spring element (86) to open the second fluid outlet orifice (80) while the first engagement element (96) is out of engagement with the first spring element (82) leaving the first fluid outlet orifice (78) closed; and
e3) in the third operative position (L) the first engagement element (94) is in engagement with the first spring element (82) to open the first fluid orifice (78) while the second engagement element (96) is out of engagement with second spring element (86) leaving the second fluid outlet orifice (80) closed.

20. Valve portion arrangement according to claim 19, ***characterized in that*** it further comprises a stopper (98) arranged stationary in the valve chamber (74) and defining the second operative position (R) and the third operative position (L) of the spring actuating element ().

21. Valve portion arrangement according to claim 19 or 20, ***characterized in that*** the first spring element (84) is held in place by a first spring anchorage.

22. Valve portion arrangement according to one of the claim 19 to 21, ***characterized in that*** the second spring element (86) is held in place by a second spring anchorage.

23. Valve portion arrangement according to claim 19 or 20, ***characterized in that*** the first spring element (82) and the second spring element (84) are realized with an essentially U-shaped double leaf spring held in position by a single spring anchorage (90).

24. Valve portion arrangement according to one of the claims 19 to 23, ***characterized in that*** the spring actuating element (92) is moved reciprocately in the valve chamber such that the first engagement element (94) and the second engagement element (96) are moved along a straight path in the valve chamber.

25. Valve portion arrangement according to one of the claims 19 to 23, ***characterized in that*** the spring actuating element (92) is rotated in the valve chamber such that the first engagement element (94) and the second engagement element (94) are moved along a circular path in the valve chamber.

26. Valve portion arrangement according to one of the claims 19 to 25, ***characterized in that*** the first spring element (82) and/or the second spring element (86) are provided with a seal element (84, 88), respectively.

27. Computer program product directly loadable into the internal memory of a microprocessor comprising software code portions for performing the method according to one of the claims 1 to 11 when the product is run on the microprocessor.
